# EUROPEAN PATENT SPECIFICATION

(11) **EP 4 077 575 B1**
(45) Date of publication and mention of the grant of the patent: **06.11.2024**
(21) Application number: 20904191.2
(22) Date of filing: 11.11.2020
(51) Int. Cl.: C09J 175/04, C09D 175/04, B01D 67/00, B01D 63/10, C08G 18/24, C08G 18/36, C08F 290/06, C08G 18/32, C08G 18/67, C08G 18/79, C09D 175/16, C09J 175/16, C09J 151/08

(54) **FOLD PROTECTION FOR SPIRAL FILTRATION MODULES UTILIZING UV CURED POLYURETHANE AND METHOD OF PROVIDING SAME**
FALTSCHUTZ FÜR SPIRALFILTERMODULE UNTER VERWENDUNG VON UV-GEHÄRTETEM POLYURETHAN UND HERSTELLUNGSVERFAHREN DAFÜR
PROTECTION DE PLI POUR MODULES DE FILTRATION EN SPIRALE UTILISANT UN POLYURÉTHANE DURCI PAR UV ET PROCÉDÉ POUR SON OBTENTION

(30) Priority: 18.12.2019 US 201962949588 P
(43) Date of publication of application: 26.10.2022
(73) Proprietor: Henkel AG & Co. KGaA, 40589 Düsseldorf (DE)
(72) Inventor: CHENG, Chih-Min, Rocky Hill, Connecticut 06067 (US); DAVIS, Jesse Lawrence, Rocky Hill, Connecticut 06067 (US); BRYAN, Zachary Jacob, Rocky Hill, Connecticut 06067 (US); KANG, Li, Rocky Hill, Connecticut 06067 (US); JIN, Shuhua, Rocky Hill, Connecticut 06067 (US)
(86) International application number: PCT/US2020/059953
(87) International publication number: WO 2021/126422

(56) References cited:
- WO-A1-2007/037939
- WO-A1-2010/068368
- WO-A1-2016/164526
- WO-A1-2017/148742
- WO-A1-2019/046200
- US-A1- 2004 039 103
- US-A1- 2004 084 138

## Description

### Field

The present disclosure relates generally to materials used as reinforcing coatings for membranes used in spiral wound filtration assemblies. The invention is set out in the appended set of claims.

### Brief Description of Related Technology

Presently, industry is utilizing spiral wound filtration assemblies to process water, food and beverage materials. Adhesives are widely used to assemble the membrane leaf components of these assemblies. In the element rolling process, it is typical for the membrane leaf to be "creased" or "folded" at the permeate water tube, creating a membrane leaf weak point. Details of such assemblies are known and may be found in, for example, U.S. Patent Nos. 4,842,736 and 7,303,675.

Adhesives have been used as coatings on the folded membrane leaf areas to try and provide the membrane with improved durability at the fold area and to prevent leakage during use. In some applications the membrane assemblies receive daily cleaning with strong chlorine solutions or high temperature (70-85 °C) and high pH (11.0-12.5) solutions. Adhesives used for fold protection must be resistant to these cleaning solutions, high temperature and high pH conditions and maintain their mechanical integrity without cracking or delaminating from the membrane material.

Two types of adhesive are currently used as fold protection materials; one is curable two component polyurethane adhesive and the other is curable acrylate adhesive. Polyurethane possesses good flexibility and resistance to high pH/temperature environments but requires a long cure time (8 hours to days). The long cure time limits polyurethane adhesives to off-line processing in producing folded membrane pack. UV curable acrylate adhesives have been proposed for use as fold protection materials. Some acrylate adhesives are too brittle for this use. More flexible acrylate adhesives are 1) not able to achieve tack-free surface under short UV exposure, and 2) easily lose integrity, adhesion, and peel off the membrane under the required high temperature and pH conditions mentioned above. As a result, neither two component polyurethane adhesive nor acrylate adhesive are optimal as a membrane fold protection material.

US 2004/084138 A discloses a solventless or solvent-containing low-monomer reactive adhesive curing in several stages which contains at least one polyurethane prepolymer (A) with a low content of monomeric polyisocyanate (a) and at least one free functional group capable of reacting with a compound containing at least one acidic hydrogen atom, more particularly at least one isocyanate group, and at least one compound (B) containing a functional group polymerizable by irradiation.

WO 2016/164526 A discloses an adhesive composition compri a first part comprising: an isocyanate group-containing prepolymer comprising a reaction product of a first isocyanate and at least one polyol; and a second isocyanate that is essentially unreacted with the first isocyanate, the at least one polyol, and the isocyanate group containing prepolymer; and a second part comprising at least two polyols; wherein the adhesive composition is essentially free of diluent oils and solvents.

From this perspective, there is a need for a high performance fold protection adhesive that is quickly curable and also has good flexibility and resistance to high pH/temperature environments.

### Summary

One aspect of the disclosure provides a hybrid, two component dual cure adhesive. The adhesive combines two component, reaction cure polyurethane chemistry and UV cure acrylate chemistry. The hybrid adhesive provides a tack-free surface after exposure to short periods of UV radiation and provides reduced shrinkage and increased flexibility. The hybrid adhesive has increased resistance to cleaning solution treatments operated at high temperature and pH. In the adhesive, the proportion of polyurethane and acrylate are adjusted to optimize the UV cure, chemical resistance, and cost.

Another aspect of the disclosure provides a membrane leaf having a hybrid, two component dual cure adhesive applied over the fold area.

Another aspect of the disclosure provides a method of applying a hybrid, two component dual cure adhesive to a membrane fold area.

In general, unless otherwise explicitly stated the disclosed materials and processes may be alternately formulated to comprise, consist of, or consist essentially of, any appropriate components, moieties or steps herein disclosed. The disclosed materials and processes may additionally, or alternatively, be formulated so as to be devoid, or substantially free, of any components, materials, ingredients, adjuvants, moieties, species and steps used in the prior art compositions or that are otherwise not necessary to the achievement of the function and/or objective of the present disclosure.

### Brief Description of the Drawings

Referring now to the drawings wherein like elements are numbered alike in the several Figures:
FIG. 1 is a schematic representation of one embodiment of a wound filtration assembly.
FIG. 2 is a schematic, cross sectional view of a membrane.
FIG. 3 is a schematic, cross sectional view of a filtration leaf.
FIG. 4 is a schematic representation of a cut membrane with curable composition applied adjacent the fold line.

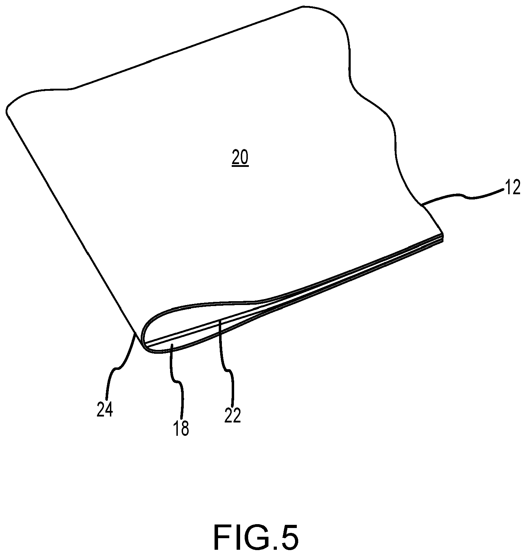

FIG. 5 is a schematic representation of a cut membrane folded around a feed spacer.

### Detailed Description

Unless defined otherwise, all technical and scientific terms used herein have the same meaning as is commonly understood by one of ordinary skill in the art. As used herein for each of the various embodiments, the following definitions apply.

The singular forms "a", "an" and "the" include plural referents unless the context clearly dictates otherwise.

About or "approximately" as used herein in connection with a numerical value refer to the numerical value ± 10%, preferably ± 5% and more preferably ± 1% or less.

At least one, as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used.

The terms "comprising", "comprises" and "comprised of" as used herein are synonymous with "including", "includes", "containing" or "contains", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Preferred and preferably are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

A one component or one part (1K) composition is a singular formulation that has sufficient commercial stability to be prepared, warehoused and shipped to an enduser. The 1K composition can be used without adding any additional components and will crosslink or cure when exposed to suitable conditions. As used herein a two component or two part (2K) composition has two or more components. Each of the components is prepared, warehoused and shipped separately from the other components. The components are mixed immediately prior to use. Mixing of the components starts a cure reaction so commercial storage after mixing is not possible.

Unless indicated otherwise, all percentages that are cited in connection with the compositions described herein refer to weight percent (wt.%) with respect to final composition of all components for a one part (1K) composition or with respect to final composition of all components in the referenced part for a two part (2K) composition.

Alkyl refers to a monovalent group that contains carbon atoms and hydrogen atoms, for example1 to 8 carbons atoms, that is a radical of an alkane and includes linear and branched configurations. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may optionally be substituted. Preferred substituents include one or more groups selected from halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. Preferred alkyl groups include unsubstituted alkyl groups containing from 1-6 carbon atoms (C₁-C₆ alkyl) - for example unsubstituted alkyl groups containing from 1 to 4 carbon atoms (C₁-C₄ alkyl).

Alkylene refers to a divalent group that contains carbon atoms, for example from 1 to 20 carbon atoms, that is a radical of an alkane and includes linear and branched organic groups, which may be unsubstituted or optionally substituted. Preferred alkylene groups include unsubstituted alkylene groups containing from 1-12 carbon atoms (C₁-C₁₂ alkylene) - for example unsubstituted alkylene groups containing from 1 to 6 carbon atoms (C₁-C₆ alkylene) or from 1 to 4 carbons atoms (C₁-C₄ alkylene).

Alkenyl group refers to an aliphatic carbon group that contains carbon atoms, for example 2 to 20, advantageously 2 to 10 and more advantageously 2 to 6 carbon atoms and at least one double bond. The alkene can be an allyl group. The alkene can contain one or more double bonds that are conjugated. Like the aforementioned alkyl group, an alkenyl group can be straight, branched or cyclic, and may be unsubstituted or may be optionally substituted. Examples of C₂-C₈ alkenyl groups include, but are not limited to: allyl; isoprenyl; 2-butenyl; and, 2-hexenyl.

"Alkoxy" refers to the structure -OR, wherein R is hydrocarbyl.

"Alkyne" or "alkynyl" refers to a hydrocarbon chain or group containing one or more triple bonds between the chain carbon atoms. The alkyne can be a straight hydrocarbon chain or a branched hydrocarbon group. The alkyne can be cyclic. The alkyne can contain 1 to 20 carbon atoms, advantageously 1 to 10 carbon atoms and more advantageously 1 to 6 carbon atoms. The alkyne can contain one or more triple bonds that are conjugated. In some embodiments the alkyne can be substituted.

"Amine" refers to a molecule comprising at least one -NHR group wherein R can be a covalent bond, H, hydrocarbyl or polyether. In some embodiments an amine can comprise a plurality of -NHR groups (which may be referred to as a polyamine).

"Aryl" or "Ar" used alone or as part of a larger moiety - as in "aralkyl group" - refers to unsubstituted or optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include phenyl; indenyl; naphthalenyl, tetrahydronaphthyl, tetrahydroindenyl; tetrahydroanthracenyl; and, anthracenyl.

Acrylate refers to the univalent -O-C(O)-C=C moiety. Methacrylate refers to the univalent -O-C(O)-C(CH3)=C moiety. (Meth)acrylate refers to acrylate and methacrylate.

Acryloyl (ACR) refers to a -C(O)-C=C moiety. Methacryloyl (MCR) refers to a - C(O)-C(CH3)=C moiety. (Meth)acryloyl refers to acryloyl and methacryloyl.

"Ester" refers to the structure R-C(O)-O-R' where R and R' are independently selected hydrocarbyl groups with or without heteroatoms. The hydrocarbyl groups can be substituted or unsubstituted.

"Halogen" or "halide" refers to an atom selected from fluorine, chlorine, bromine and iodine.

"Hetero" refers to one or more heteroatoms in a structure. Exemplary heteroatoms are independently selected from N, O and S. an atom other than carbon or hydrogen, for example nitrogen, oxygen, phosphorus or sulfur. The expression "interrupted by at least one heteroatom" means that the main chain of a residue comprises, as a chain member, at least one heteroatom.

"Heteroaryl" refers to a monocyclic or multicyclic aromatic ring system wherein one or more ring atoms in the structure are heteroatoms. Exemplary heteroatoms are independently selected from N, O and S. The cyclic rings can be linked by a bond or fused. The heteroaryl can contain from 5 to about 30 carbon atoms; advantageously 5 to 12 carbon atoms and in some embodiments 5 to 6 carbon atoms. Exemplary heteroaryls include furyl, imidazolyl, pyrimidinyl, tetrazolyl, thienyl, pyridyl, pyrrolyl, thiazolyl, isothiazolyl, oxazolyl, isoxazolyl, thiazolyl, quinolinyl and isoquinolinyl. In some embodiments the heteroaryl is substituted.

"Hydrocarbyl" refers to a group containing carbon and hydrogen atoms. The hydrocarbyl can be linear, branched, or cyclic group. The hydrocarbyl can be alkyl, alkenyl, alkynyl or aryl. In some embodiments, the hydrocarbyl is substituted.

"Molecular weight" refers to weight average molecular weight unless otherwise specified. The number average molecular weight Mₙ, as well as the weight average molecular weight M_{w}, is determined according to the present invention by gel permeation chromatography (GPC, also known as SEC) at 23°C using a styrene standard. This method is known to one skilled in the art. The polydispersity is derived from the average molecular weights M_{w} and Mₙ. It is calculated as PD = M_{w}/Mₙ. Polydispersity indicates the width of the molecular weight distribution and thus of the different degrees of polymerization of the individual chains in polydisperse polymers. For many polymers and polycondensates, a polydispersity value of about 2 applies. Strict monodispersity would exist at a value of 1. A low polydispersity of, for example, less than 1.5 indicates a comparatively narrow molecular weight distribution.

"Oligomer" refers to a defined, small number of repeating monomer units such as 2-5,000 units, and advantageously 10-1,000 units which have been polymerized to form a molecule. Oligomers are a subset of the term polymer.

"Polyether" refers to polymers which contain multiple ether groups (each ether group comprising an oxygen atom connected top two hydrocarbyl groups) in the main polymer chain. The repeating unit in the polyether chain can be the same or different. Exemplary polyethers include homopolymers such as polyoxymethylene, polyethylene oxide, polypropylene oxide, polybutylene oxide, polytetrahydrofuran, and copolymers such as polyethylene oxide co propylene oxide), and EO tipped polypropylene oxide.

"Polyester" refers to polymers which contain multiple ester linkages. A polyester can be either linear or branched.

"Polymer" refers to any polymerized product greater in chain length and molecular weight than the oligomer. Polymers can have a degree of polymerization of about 20 to about 25000. As used herein polymer includes oligomers and polymers. Polymerization conditions means the reaction conditions suitable to combine monomers into polymers.

"Polyol" refers to a molecule comprising two or more -OH groups. A polyol can further have other functionalities on the molecule. The term "polyol" encompasses a single polyol or a mixture of two or more polyols.

Room temperature refers a temperature of about 22 to 25°C.

"Substituted" refers to the presence of one or more substituents on a molecule in any possible position. Useful substituents are those groups that do not significantly diminish the disclosed reaction schemes. Exemplary substituents include, for example, H, halogen, (meth)acrylate, epoxy, oxetane, urea, urethane, N₃, NCS, CN, NCO, NO₂, NX¹X², OX¹, C(X¹)₃, C(halogen)₃, COOX¹, SX¹, Si(OX¹)iX²₃₋ᵢ, alkyl, alcohol, alkoxy; wherein X¹ and X² each independently comprise H, alkyl, alkenyl, alkynyl or aryl and i is an integer from 0 to 3.

"Thiol" refers to a molecule comprising at least one -SH group. In some embodiments a thiol can comprise a plurality of -SH groups (which may be referred to as a polythiol).

The adhesive includes one or more multifunctional polyols. As used herein a multifunctional polyol is a molecule having two or more OH groups and optionally other functional groups. Multifunctional polyol include aromatic polyester and polyether polyols, aliphatic polyester and polyether polyols, polypropylene glycol polyols, castor oil based polyols, polycaprolactone polyols, and polycarbonate polyols from various suppliers such as INVISTA, BASF, Huntsman, Univar, and Bayer. The multifunctional polyol can have a MW of 60 g/mol to 6,000 g/mol. In some embodiments the multifunctional polyol can have a MW of 140 g/mol to 4,000 g/mol.

The multifunctional polyol can comprise a short chain polyol. Short chain polyols have typical MW less than 1000 g/mol and preferably 60 g/mol to 1,000 g/mol. Useful short chain polyols include ethanediol, propanediol, butanediol.

The adhesive includes one or more (meth)acrylate monomers. (Meth)acrylate monomer includes monofunctional (meth)acrylate monomers, multifunctional (meth)acrylate monomers and combinations thereof. The monofunctional (meth)acrylate monomer can be selected from monofunctional alkyl (meth)acrylates, monofunctional alkenyl (meth)acrylates, and monofunctional heterocyclo (meth)acrylates, wherein said alkyl is an alkyl group having from 1 to 20 carbon atoms, which may have one or more substituents; said alkenyl is an alkenyl group having from 2 to 20 carbon atoms, which may have one or more substituents; and said heterocyclo is a heterocyclic group having from 2 to 20 carbon atoms and having a heteroatom selected from nitrogen and oxygen, which may have one or more substituents; said one or more substituents may be selected from an alkyl group having from 1 to 20 carbon atoms, an alkyloxy group having from 1 to 20 carbon atoms, an aryloxy group having from 6 to 20 carbon atoms, a cyclalkyloxy group having from 3 to 20 carbon atoms, and hydroxyl.

The multifunctional (meth)acrylate monomer can be selected from multifunctional alkyl (meth)acrylates, multifunctional alkenyl (meth)acrylates, and multifunctional heterocyclo (meth)acrylates, wherein said alkyl is an alkyl group having from 1 to 20 carbon atoms, which may have one or more substituents; said alkenyl is an alkenyl group having from 2 to 20 carbon atoms, which may have one or more substituents; and said heterocyclo is a heterocyclic group having from 2 to 20 carbon atoms and having a heteroatom selected from nitrogen and oxygen, which may have one or more substituents; said one or more substituents may be selected from an alkyl group having from 1 to 20 carbon atoms, an alkyloxy group having from 1 to 20 carbon atoms, an aryloxy group having from 6 to 20 carbon atoms, a cycloalkyloxy group having from 3 to 20 carbon atoms, and hydroxyl.

Representative examples of the (meth)acrylate monomer include methyl (meth)acrylate, ethyl (meth)acrylate, butyl (meth)acrylate, 2-(2-ethoxyethoxy) ethyl acrylate, tetrahydrofurfury (meth)acrylate, lauryl acrylate, isooctyl acrylate, isodecyl acrylate, 2-phenoxyethyl acrylate, 2-ethylhexyl (meth)acrylate, isobornyl (meth)acrylate, dicyclopentenyloxyethyl (meth)acrylate, dicyclopentadienyl (meth)acrylate, 2-hydroxyethyl (meth)acrylate, 2-hydroxypropyl (meth)acrylate, 2-hydroxybutyl (meth)acrylate, caprolactone acrylate, morpholine (meth)acrylate, hexanediol di(meth)acrylate, ethyleneglycol dimethacrylate, trimethylolpropane triacrylate, pentaerythritol tetraacrylate and combinations thereof.

The adhesive can include one or more (meth)acrylate monomers that include di- or tri-functional (meth)acrylates like polyethylene glycol di(meth)acrylates, tetrahydrofuran (meth)acrylates and di(meth)acrylates, hydroxypropyl (meth)acrylate, hexanediol di(meth)acrylate, trimethylol propane tri(meth)acrylate ("TMPTMA"), diethylene glycol dimethacrylate, triethylene glycol dimethacrylate ("TRIEGMA"), benzylmethacrylate, tetraethylene glycol dimethacrylate, dipropylene glycol dimethacrylate, di-(pentamethylene glycol) dimethacrylate, tetraethylene diglycol diacrylate, diglycerol tetramethacrylate, tetramethylene dimethacrylate, ethylene dimethacrylate, neopentyl glycol diacrylate, trimethylol propane triacrylate and bisphenol-A mono and di(meth)acrylates, such as ethoxylated bisphenol-A (meth)acrylate ("EBIPMA"), bisphenol-F mono and di(meth)acrylates, such as ethoxylated bisphenol-F (meth)acrylate.

The adhesive includes one or more (meth)acrylate-functionalized urethanes. Useful (meth)acrylate functionalized urethanes include tetramethylene glycol urethane acrylate oligomer and a propylene glycol urethane acrylate oligomer. Other (meth)acrylate-functionalized urethanes are urethane (meth)acrylate oligomers based on polyethers or polyesters, which are reacted with aromatic, aliphatic, or cycloaliphatic diisocyanates and capped with hydroxy acrylates. Some useful examples include difunctional urethane acrylate oligomers, such as a polyester of hexanedioic acid and diethylene glycol, terminated with isophorone diisocyanate, capped with 2-hydroxyethyl acrylate (CAS 72121-94-9); a polypropylene glycol terminated with tolyene-2,6-diisocyanate, capped with 2-hydroxyethylacrylate (CAS 37302-70-8); a polyester of hexanedioic acid and diethylene glycol, terminated with 4,4'-methylenebis(cyclohexyl isocyanate), capped with 2-hydroxyethyl acrylate (CAS 69011-33-2); a polyester of hexanedioic acid, 1,2-ethanediol, and 1,2 propanediol, terminated with tolylene-2,4-diisocyanate, capped with 2-hydroxyethyl acrylate (CAS 69011-31-0); a polyester of hexanedioic acid, 1,2-ethanediol, and 1,2 propanediol, terminated with 4,4'-methylenebis(cyclohexyl isocyanate, capped with 2-hydroxyethyl acrylate (CAS 69011-32-1); and a polytetramethylene glycol ether terminated with 4,4'-methylenebis(cyclohexylisocyanate), capped with 2-hydroxyethyl acrylate. Still other (meth)acrylate-functionalized urethanes are monofunctional urethane acrylate oligomers, such as a polypropylene terminated with 4,4'-methylenebis(cyclohexylisocyanate), capped with 2-hydroxyethyl acrylate and 1-dodosanol.

(Meth)acrylate-functionalized urethanes also include difunctional urethane methacrylate oligomers such as a polytetramethylene glycol ether terminated with tolulene-2,4-diisocyanate, capped with 2-hydroxyethyl methacrylate; a polytetramethylene glycol ether terminated with isophorone diisocyanate, capped with 2-hydroxyethyl methacrylate; a polytetramethylene glycol ether terminated with 4,4'-methylenebis(cyclohexylisocyanate), capped with 2-hydroxyethyl methacrylate; and a polypropylene glycol terminated with tolylene-2,4-diisocyanate, capped with 2-hydroxyethyl methacrylate.

The adhesive includes one polyisocyanate or a mixture of different polyisocyanates. Polyisocyanate includes a compound which has at least two reactive isocyanate (-NCO) groups. The polyisocyanate does not have to be a polymer and can be a low molecular compound or monomer.

The polyisocyanates suitable for preparing the polyurethane according to the invention include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H12-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates.

Other useful polyisocyanates include modified forms of polyisocyanate monomers. Examples of useful modified polyisocyanates include, for example, carbodiimide-modified diphenylmethane diisocyanate (carbodiimide-modified MDI), allophanate-modified diphenylmethane diisocyanate (allophanate-modified MDI), biuret-modified diphenylmethane diisocyanate (biuret-modified MDI), polymeric diphenylmethane diisocyanate (polymeric MDI), and combinations thereof. The preparation of modified polyisocyanates are generally known and the modified polyisocyanates can be prepared by known methods and/or are commercially available.

Other useful polyisocyanates include polyisocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

The adhesive includes one or more linking components. A linking component is a tie molecule that can react with both the acrylate moieties and the isocyanate moieties present in the mixed adhesive components. Useful linking components include hydroxyl containing (meth)acrylates, amine containing (meth)acrylates, isocyanate containing (meth)acrylates. The adhesive can include one or more hydroxyl containing (meth)acrylates. These components can form, for example, acrylate-acrylate bonds as well as isocyanate-hydroxyl bonds.

Hydroxyl containing (meth)acrylate includes (meth)acrylate compounds having one or more reactive hydroxyl (OH) moieties. Some useful hydroxyl containing (meth)acrylates include, for example, hydroxyethyl acrylate, hydroxypropyl acrylate, hydroxyethyl methacrylate, hydroxypropyl methacrylate, N-Hydroxyethyl acrylamide, hydroxybutyl acrylate, hydroxypolyethoxy (10) allyl ether, 3-phenoxy 2 hydroxy propyl methacrylate, glycerol monomethacrylate and mixtures thereof.

Amine containing (meth)acrylate includes (meth)acrylate compounds having one or more reactive amine (NH or NH₂) moieties. Some useful amine containing (meth)acrylates include, for example, 2-aminoethyl methacrylate, 2-diisopropylaminoethyl methacrylate, N-(3-aminopropyl)methacrylamide and 2-(N,N-dimethylamino)ethyl acrylate.

Isocyanate containing (meth)acrylate includes (meth)acrylate compounds having one or more reactive isocyanate (NCO) moieties and one or more (meth)acrylate moieties. Some useful isocyanate containing (meth)acrylates include isocyanate bearing-polyester urethane (meth)acrylates, -polyether urethane (meth)acrylates, -aliphatic urethane (meth)acrylates, -aromatic urethane (meth)acrylates available from suppliers such as Sartomer and Allnex.

The adhesive includes one or more photoinitiators. Photoinitiators enhance the rapidity of the curing process when the mixed adhesive composition is exposed to electromagnetic radiation, such as actinic radiation, for example ultraviolet (UV) radiation. Examples of some useful photoinitiators include, but are not limited to, photoinitiators available commercially from Ciba Specialty Chemicals, under the "IRGACURE" and "DAROCUR" trade names, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl) phosphine oxide and 2-hydroxy-2-methyl-1-phenyl-propan-1-one), and 819 [bis(2,4,6-trimethyl benzoyl) phenyl phosphine oxide] and "DAROCUR" 1173 (2-hydroxy-2-methyl-1-phenyl-1-propan-1-one) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof. Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE" 819), and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., "IRGACURE" 1700), as well as the visible photoinitiator bis (5-2,4-cyclopentadien-1-yl)-bis[2,6-difluoro-3-(1H-pyrrol-1-yl)phenyl]titanium (e.g., "IRGACURE" 784DC). Useful actinic radiation includes ultraviolet light, visible light, and combinations thereof.

Other photoinitiators useful herein include polymeric photoinitiators. Typically, these photoinitiators have molecular weight between 600-1000 g/mol and are often referred to as oligomeric or polymeric photoinitiators. Preferably molecular weights above 1000 g/mol are considered as not toxicologically relevant. Polymeric photoinitiators include polymeric benzophenone derivatives, polymeric thioxanthone derivatives, and aminobenzoate derivatives available from suppliers such as RAHN. GENOPOL* TX-2 is a multifunctional thioxanthone derivative designed for the use in UV-curable coatings and adhesives, where low migration and low odor is required. GENOPOL* AB-2 is a multifunctional aminobenzoate derivative designed for the use in UV-curable adhesives where low migration and low odor are required. GENOPOL* AB-2 can be used as replacement for standard aminobenzoates and is insoluble in water.

Desirably, the actinic radiation used to cure the photocurable elastomeric sealant composition has a wavelength from about 200 nm to about 1,000 nm. Useful UV includes, but is not limited to, UVA (about 320 nm to about 410 nm), UVB (about 290 nm to about 320 nm), UVC (about 220 nm to about 290 nm) and combinations thereof. Useful visible light includes, but is not limited to, blue light, green light, and combinations thereof. Such useful visible lights have a wavelength from about 450 nm to about 550 nm.

The adhesive includes one or more catalysts. Catalyst includes a catalyst or cure-inducing component to modify speed of the reaction when the two components are mixed. Some suitable catalysts are those conventionally used in polyurethane reactions and polyurethane curing, including organometallic catalysts, organotin catalysts, bismuth catalysts, zirconium catalysts, titanate catalysts, and amine catalysts. Exemplary catalysts include (1,4-diazabicyclo[2.2.2]octane) DABCO^{®} T-12 or DABCO^{®} crystalline, available from Evonik; DMDEE (2,2'-dimorpholinildiethylether); DBU (1,8-diazabicyclo[5.4.0]undec-7-ene). The curable composition can optionally include more than one catalyst.

The adhesive can optionally include one or more additives. The additives can be contained in either or both of the components. Some useful additives include filler, thixotrope, rheology modifier, antioxidant, reaction modifier, thermoplastic polymer, adhesion promoter, coloring agent, tackifier, plasticizer, flame retardant, diluent, reactive diluent, moisture scavenger and combinations thereof.

The curable composition can optionally include filler. Some useful fillers include, for example, lithopone, zirconium silicate, hydroxides, such as hydroxides of calcium, aluminum, magnesium, iron and the like, diatomaceous earth, carbonates, such as sodium, potassium, calcium, and magnesium carbonates, oxides, such as zinc, magnesium, chromic, cerium, zirconium and aluminum oxides, calcium clay, nanosilica, fumed silicas, silicas that have been surface treated with a silane or silazane such as the AEROSIL^{®} products available from Evonik Industries, silicas that have been surface treated with an acrylate or methacrylate such as AEROSIL^{®} R7200 or R711 available from Evonik Industries, precipitated silicas, untreated silicas, graphite, synthetic fibers and mixtures thereof. When used, filler can be employed in concentrations effective to provide desired properties in the uncured composition and cured reaction products and typically in concentrations of about 0% to about 90% by weight of composition, more typically 1% to 30% by weight of composition of filler. Suitable fillers include organoclays such as, for example, Cloisite^{®} nanoclay sold by Southern Clay Products and exfoliated graphite such as, for example, xGnP^{®} graphene nanoplatelets sold by XG Sciences. In some embodiments, enhanced barrier properties are achieved with suitable fillers.

The curable composition can optionally include a thixotrope or rheology modifier. The thixotropic agent can modify rheological properties of the uncured composition. Some useful thixotropic agents include, for example, silicas, such as fused or fumed silicas, that may be untreated or treated so as to alter the chemical nature of their surface. Virtually any reinforcing fused, precipitated silica, fumed silica or surface treated silica may be used. Examples of treated fumed silicas include polydimethylsiloxane-treated silicas, hexamethyldisilazane-treated silicas and other silazane or silane treated silicas. Such treated silicas are commercially available, such as from Cabot Corporation under the tradename CAB-O-SIL^{®} ND-TS and Evonik Industries under the tradename AEROSIL^{®}, such as AEROSIL^{®} R805. Also useful are the silicas that have been surface treated with an acrylate or methacrylate such as AEROSIL^{®} R7200 or R711 available from Evonik Industries. Examples of untreated silicas include commercially available amorphous silicas such as AEROSIL^{®} 300, AEROSIL^{®} 200 and AEROSIL^{®} 130. Commercially available hydrous silicas include NIPSIL^{®} E150 and NIPSIL^{®} E200A manufactured by Japan Silica Kogya Inc. The rheology modifier can be employed in concentrations effective to provide desired physical properties in the uncured composition and cured reaction products and typically in concentrations of about 0% to about 70% by weight of the composition and advantageously in concentrations of about 0% to about 20% by weight of the composition. In certain embodiments the filler and the rheology modifier can be the same.

The curable composition can optionally include an antioxidant. Some useful antioxidants include those available commercially from BASF under the tradename IRGANOX^{®}. When used, the antioxidant should be present in the range of about 0 to about 15 weight percent of curable composition, such as about 0.3 to about 1 weight percent of curable composition.

The curable composition can optionally include a reaction modifier. A reaction modifier is a material that will increase or decrease reaction rate of the curable composition. For example, 8-hydroxyquinoline (8-HQ) and derivatives thereof such as 5-hydroxymethyl-8-hydroxyquinoline can be used to adjust the cure speed. When used, the reaction modifier can be used in the range of about 0.001 to about 15 weight percent of curable composition.

The curable composition can optionally contain a thermoplastic polymer. The thermoplastic polymer may be either a functional or a non-functional thermoplastic. Nonlimiting examples of suitable thermoplastic polymers include acrylic polymer, functional (e.g. containing reactive moieties such as -OH and/or -COOH) acrylic polymer, non-functional acrylic polymer, acrylic block copolymer, acrylic polymer having tertiary-alkyl amide functionality, polysiloxane polymer, polystyrene copolymer, divinylbenzene copolymer, polyetheramide, polyvinyl acetal, polyvinyl butyral, polyvinyl chloride, methylene polyvinyl ether, cellulose acetate, styrene acrylonitrile, amorphous polyolefin, olefin block copolymer [OBC], polyolefin plastomer, thermoplastic urethane, polyacrylonitrile, ethylene acrylate copolymer, ethylene acrylate terpolymer, ethylene butadiene copolymer and/or block copolymer, styrene butadiene block copolymer, and mixtures of any of the above.

The curable composition can optionally include one or more adhesion promoters that are compatible and known in the art. Examples of useful commercially available adhesion promoters include amino silane, glycidyl silane, mercapto silane, isocyanato silane, vinyl silane, (meth)acrylate silane, and alkyl silane. Common adhesion promoters are available from Momentive under the trade name Silquest or from Wacker Chemie under the trade name Geniosil. Silane terminated oligomers and polymers can also be used. The adhesion promoter can be used in the range of about 0% to about 20% percent by weight of curable composition and advantageously in the range of about 0.1% to about 15% percent by weight of curable composition.

The curable composition can optionally include one or more coloring agents. For some applications a colored composition can be beneficial to allow for inspection of the applied composition. A coloring agent, for example a pigment or dye, can be used to provide a desired color beneficial to the intended application. Exemplary coloring agents include titanium dioxide, C.I. Pigment Blue 28, C.I. Pigment Yellow 53 and phthalocyanine blue BN. In some applications a fluorescent dye can be added to allow inspection of the applied composition under UV radiation. The coloring agent will be present in amounts sufficient to allow observation or detection, for example about 0.002% or more by weight of total composition. The maximum amount is governed by considerations of cost, absorption of radiation and interference with cure of the composition. More desirably, the coloring agent may be present in amounts of up to about 20% by weight of total composition.

The curable composition can optionally include from about 0% to about 20% by weight, for example about 1% to about 20% by weight of composition of other additives known in the arts, such as tackifier, plasticizer, flame retardant, diluent, reactive diluent, moisture scavenger, and combinations of any of the above, to produce desired functional characteristics, providing they do not significantly interfere with the desired properties of the curable composition or cured reaction products of the curable composition.

When used as an adhesive, the curable compositions can optionally include up to 80% by weight of the total weight of the curable composition of a suitable solvent. This type of adhesives is known as solvent-based adhesives. Upon application of the curable composition on a first substrate, the solvent is quickly evaporated away, for example by heated ovens, then a second substrate is laminated onto the curable composition coated side of the first substrate to form a laminated structure. In other embodiments the curable composition is substantially free or free of solvent and/or water.

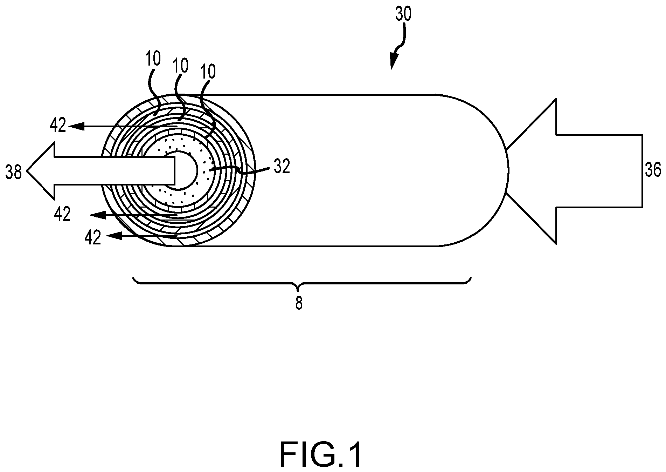

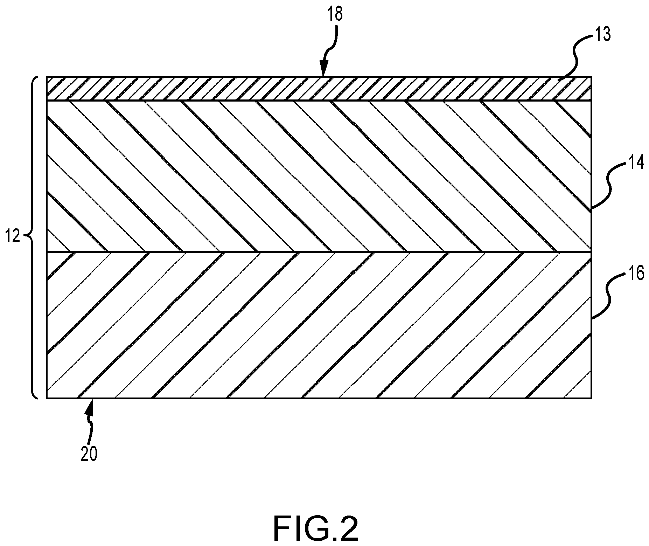

With reference to Fig. 1, the filtration assembly 30 typically comprises a core or permeate carrier 32 around which a plurality of leaves (each 10) and other elements are spirally wound and secured. Each leaf 10 includes a membrane 12. In one embodiment shown in Fig. 2 the membrane 12 comprises a thin, dense semi-permeable layer 13 such as a polyamide film overlying the filtration layer 14 such as polyethersulfone overlying the support layer 16 such as polyester scrim. The thin, dense semi-permeable layer 13 defines one surface 18 of the membrane 12 and the support layer 16 defines an opposing surface 20 of the membrane 12. The thin, dense semi-permeable layer 13 or the thin, dense semi-permeable layer 13 in combination with the filtration layer 14 effect separation. In another embodiment the membrane 12 comprises a filtration layer 14 such as polyethersulfone over a support layer 16 such as polyester scrim. The filtration layer 14 defines one surface 18 of the membrane 12 and the support layer 16 defines an opposing surface 20 of the membrane 12. The filtration layer 14 effects separation.

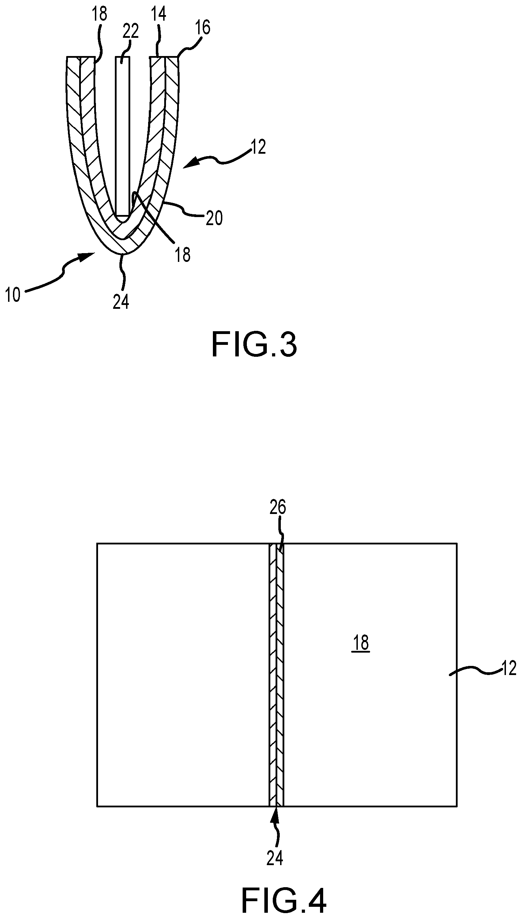

Membrane 12 is cut from a roll of material to a desired size. As shown in Fig. 4 a fold line 24 is established in the cut membrane. The curable composition 26 is mixed and applied to the cut membrane 12 adjacent the fold line 24. Adjacent the fold line means over the fold line area and extending beyond that fold line for some defined distance. The curable composition can be applied over the fold line and about 0.1 to 5.0 inches on either side of the fold line. The curable composition is not applied over the entire membrane surface as this degrades filtration ability of the membrane and can make the coated membrane unusable. The curable composition 26 can be applied adjacent the fold line 24 on either the filtration surface 18, the support layer surface 20 or both. Mixing and application of the curable composition 26 can be done by established methods.

The applied mixture of curable composition 26 is exposed to actinic radiation, typically in the ultraviolet (UV) wavelength, to initiate a first cure. The mixed polyurethane components will subsequently cure by reaction of the polyol and polyisocyanate materials.

With reference to Fig.s 3 and 5, the cut membrane 12 with cured composition is folded along the fold line 24 and the feed spacer material 22 is disposed between the adjacent filtration surfaces 18 of the folded membrane. The feed spacer 22 is typically a fluid permeable polymeric net type structure. A permeate carrier 34 may be located adjacent the support surface 20. The components are wound around the permeate carrier 34 and secured thereto.

The filtration assembly 30 is placed in a housing (not shown). A feed stream 36 is provided to the housing under pressure. The feed stream 36 is comprised of at least two constituents. An illustrative example of the feed stream would be salt water. The feed spacer 22 directs the feed stream 36 longitudinally across the filtration assembly in contact with the filtration surface 18 of the thin, dense semi-permeable layer 13 or filtration layer 14. Water with none or a lower concentration of salt goes through the membranes 10 in a generally perpendicular direction from filtration surface 18 toward the support surface 20 in the filtration assembly forming a permeate stream 38 directed through the porous permeate carrier layer 34 (not shown) into the permeate tube 32. The permeate stream 38 is discharged from the permeate tube 32. The remainder of the feed stream 36, now having a higher concentration of salt than it started with, forms a concentrate stream 42 that is directed out of the filtration assembly 30 separately from the permeate stream 38.

In the Table below the components of some embodiments of the presently disclosed adhesive composition are presented. The amounts are the percentage by weight of that component based on the total adhesive weight.

| component | range wt. % | preferred range wt. % |
|---|---|---|
| multifunctional polyol | 2-40 wt.% | 5-20 wt.% |
| short chain polyol | 0-5 wt.% | 0-3 wt.% |
| (meth)acrylate monomer | 0-30 wt.% | 0-20 wt.% |
| linking component | 0-40 wt. % | 5-25 wt.% |
| urethane (meth)acrylate oligomer | 0-80 wt.% | 2-60 wt.% |
| polyisocyanate | 5-80 wt.% | 10-60 wt.% |
| photoinitiator | 0.01-10 wt.% | 0.2-5 wt.% |
| polyurethane catalyst | 0.01-2.0 wt.% | 0.02-1.0 wt.% |
| additive | 0-40 wt.% | 2-20 wt.% |

The components are combined into two components. One component comprises the polyisocyanate and the other component comprises the polyols, hydroxyl containing (meth)acrylate and polyurethane catalyst. The remaining materials may be placed in either component as desired to maintain commercial stability. The two components are stored separately to prevent reaction. Shortly before use the components are mixed to substantial homogeneity to initiate a reaction between the polyisocyanate and hydroxyl containing materials. During reaction the mixture will increase in viscosity and the mixed material cannot be stored and must be used quickly before the mixture cures to an unacceptably high viscosity. In some embodiments the mixed components will have an unacceptably high viscosity in about one hour.

The following examples are included for purposes of illustration so that the disclosure may be more readily understood and are in no way intended to limit the scope of the disclosure unless otherwise specifically indicated.

The components in the following Table were utilized in the examples.

| TABLE | |
|---|---|
| Component | |
| AA3944 | commercially available one component acrylate adhesive available from Henkel Corporation. |
| AA3971 | commercially available one component acrylate adhesive available from Henkel Corporation. |
| UK178 | commercially available two component polyurethane adhesive available from Henkel Corporation. |
| multifunctional polyol | castor oil |
| short chain polyol | Multranol 4012, a 450-molecular-weight polypropylene oxide-based triol available from Covestro. |
| (meth)acrylate monomer | isobornyl acrylate |
| linking component | hydroxyethyl methacrylate (HEMA) |
| urethane (meth)acrylate oligomer | BR 582E8, an aliphatic polyether urethane acrylate oligomer available from Dymax |
| urethane (meth)acrylate oligomer | Photomer 6008, an aliphatic urethane acrylate oligomer available from IGM Resins |
| photoinitiator | trimethylbenzoyl diphenyl phosphine oxide (TPO) |
| photoinitiator | Omnirad 184 available from IGM Resins |
| catalyst | Fomrez UL 28, an organotin dimethyltin dineodecanoate by Galata Chemicals. |
| polyisocyanate | Suprasec 2029, a uretonimine-modified, low-functionality MDI |

Adhesive components were made using the materials and amounts in the following Table.

| Sample | chemistry | Part A | Part B |
|---|---|---|---|
| A | one component acrylic only | AA3944 | none |
| B | one component acrylic only | AA3971 | none |
| C | two component polyurethane only | UK178A | UK178B |
| 1 | two component hybrid acrylic-polyurethane | 30 % AA3944 | 70 % UK178A/B |
| 2 | two component hybrid acrylic-polyurethane | 50 % AA3944 | 50 % UK178A/B |
| 3 | two component hybrid acrylic-polyurethane | 70 % AA3944 | 30 % UK178A/B |
| 4 | two component hybrid acrylic-polyurethane | 4A | 4B |
| 5 | two component hybrid acrylic-polyurethane | 5A | 5B |

Examples 4A, 4B, 5A and 5B were made by mixing the materials in the following Tables together in the absence of moisture.

| **Table** | | |
|---|---|---|
| **Part A Material** | **4A** | **5A** |
| multifunctional polyol¹ | 33.00% | 14.25% |
| short chain polyol² | 2.18% | 1.40% |
| (meth)acrylate monomer³ | 5.04% | 0 |
| linking component⁴ | 35.31% | 24.90% |
| urethane acrylate oligomer⁵ | 12.59% | 42.70% |
| urethane acrylate oligomer⁶ | 10.07% | 14.20% |
| photoinitiator⁷ | 0.76% | 1.07% |
| photoinitiator⁸ | 1.00% | 1.42% |
| catalyst⁹ | 0.05% | 0.06% |
| Part A total | 100.00% | 100.00% |
| | | |

| **Part B Material** | **4B** | **5B** |
|---|---|---|
| polyisocyanate¹⁰ | 74.07% | 33.34% |
| (meth)acrylate monomer¹¹ | 7.41% | 33.33% |
| urethane acrylate oligomer¹² | 18.52% | 33.33% |
| Part B Total | 100.00% | 100.00% |

| | | |
|---|---|---|
| 1 castor oil 2 Multranol 4012 3 isobornyl acrylate 4 HEMA 5 BR 528E8 6 Photomer 6008 7 TPO-L 8 Omnirad 184 9 Fomrez UL28 10 Suprasec 2029 11 isobornyl acrylate 12 BR 528E8 | | |

Comparative samples A and B are commercially available, single component UV-curable acrylic adhesives. Comparative sample C is a commercially available 2-component polyurethane.

The samples were tested for curing, tackiness, bend adhesion and chemical resistance. The mebrane used was DOW NF-245 3" X 3"and a coating of the sample material was applied to a surface of the membrane at a thickness of about 0.2 - 0.3 mm and cured.

UV curing was tested by exposing a sample to UV light having a wavelength of 405 nm for 10 seconds at 1.61 W/cm². After curing sample surface was tested for tackiness by feel.

Reactive curing for the 3K mix was tested by mixing the two components at 30:70, 50:50, and 70:30 acrylic: polyurethane weight % (wt %) ratio and holding for 24 hours at room temperature. Reactive curing for the integrated hybrid system was tested at a 1:1 volume mix ratio with an overall polyurethane content of 55 wt % and 24 wt % in samples 4 and 5, respectively. Samples were held for 24 hours at room temperature. After curing sample surface was tested for tackiness by feel.

Bend adhesion was tested by a bend test. The test involves coating one surface of a membrane with a test composition and curing the composition. The coated membrane is folded a first time so that the cured coating is internal to the bend, returned to the flat starting position and folded a second time so that the cured coating is external to the bend. Samples were considered pass if no cracks or delamination of the cured coating from the membrane was observed.

Chemical resistance was tested using an immersion test. Samples were immersed in a 12.5 pH aqueous solution which was then placed in an 80 °C temperature-controlled oven. The samples were checked periodically for degradation or delamination and the results recorded.

Results of the testing are shown in the Table below.

| Sample | **A** | **B** | **C** | **1** | **2** | **3** | **4** | **5** |
|---|---|---|---|---|---|---|---|---|
| Chemistry | acrylate | acrylate | PU | 3K mix | 3K mix | 3K mix | integrated hybrid | integrated hybrid |
| Mixture type | 1k | 1k | 2k | 3k | 3k | 3k | 2k | 2k |
| Part A | AA3944 | AA3971 | UK178A | AA3944 | AA3944 | AA3944 | 4A | 5A |
| Part B | none | none | Uk178B | UK178A | UK178A | UK178A | 4B | 5B |
| Part C | none | none | none | UK178B | UK178B | UK178B | none | none |
| PU wt.% | 0 | 0 | 100 | 70 | 50 | 30 | 55 | 24 |
| UV curing* | yes | yes | no | yes | yes | yes | yes | yes |
| reactive curing | no | no | yes 24 hour | yes 24 hour | yes 24 hour | yes 24 hour | yes 24 hour | yes 24 hour |
| Surface tackiness after UV cure | tack-free | tack-free | na | very tacky | slightly tacky | tack-free | tack-free | tack-free |
| Surface tackiness after UV cure + 24 hour @ RT | tack-free | tack-free | tack-free | tack-free | slightly tacky | tack-free | tack-free | tack-free |
| bend test | Pass | Pass | Pass | Pass | Pass | Pass | Pass | Pass |
| Adhesive integrity after Soaking** for 3 days | Fail peels from membrane | Fail dissolved | Pass | Pass | Pass | slightly degraded | Pass | Pass |
| Adhesive integrity after Soaking** for 10 days | Fail peels from membrane | not run | Pass | slightly degraded | Fail partial peel from membrane | Fail peel from membrane | Pass | Pass |

| | | | | | | | | |
|---|---|---|---|---|---|---|---|---|
| * 10 seconds exposure to 405 nm radiation at 1.61 W/cm2 ** 80 °C / 12.5pH aqueous solution | | | | | | | | |

Both samples A and B can be cured under UV conditions and give good tack-free films on filter membranes in less than 10 seconds.

Samples 1, 2, and 3 are each three component (3K) adhesives comprising a UV-curable component and two, separate polyurethane components. The three components are stored separately and mixed just before use to initiate curing of the polyurethane components. The polyurethane content of each sample decreases from 70 wt.% to 30 wt.%. Due to the increased PU content in samples 1 and 2 the surface remained tacky for a few hours after initial UV-cure, this is not desirable.

Sample 4 and 5 are each an integrated, polyurethane-acrylate, dual cure, two component hybrid system which comprises a primary UV-cure free radical reaction with a secondary polyurethane reaction. Tack-free surfaces was achieved after exposure to UV-light even with a PU content greater than 50 wt% (sample 4).

Samples 4 and 5 are 2K adhesives that are more convenient to use than the 3K mixes of samples 1, 2 and 3. Further, both components of samples 4 and 5 are stable during commercial storage conditions for 6 months or more with no separation of materials in the component.

All samples passed the fold/crease test where the membrane was bent along the surface coating, keeping the coating on the outer face. Similarly, all samples passed the fold/crease test where the membrane was bent along the surface coating, keeping the coating on the inner face. No cracks or coating adhesion failure was observed for any sample in either test.

Membrane samples, each coated on one surface with cured reaction products of one of the samples, were immersed in a 12.5 pH aqueous solution and placed in an 80 °C temperature-controlled oven. After 3 days sample A lost adhesion and began to peel from the membrane. This would be a failure in use. Sample B completely dissolved in the solution. This would be a failure in use. Slight degradation was observed in sample 3 which contained 70 wt% acrylic adhesive. This would be undesirable in use. Samples C, 1, 2, 4 and 5 did not exhibit any loss of adhesion or dissolution and maintained film integrity.

Membrane samples, each coated on one surface with cured reaction products of one of the samples, were immersed in a 12.5 pH aqueous solution and placed in an 80 °C temperature-controlled oven for 10 days. After 10 days sample A (100% acrylic) lost all adhesion however; the film did not dissolve in the solution. This would be a failure in use. After 10 days sample 2 (50 wt.% acrylic and 50 wt.% polyurethane) and sample 3 (70 wt.% acrylic and 30 wt.% polyurethane) either lost all adhesion or began to show significant signs of degradation and detachment. This would be a failure in use. After 10 days sample 1 (30 wt.% acrylic and 70 wt.% polyurethane) with the highest PU wt% began to show an onset of adhesion failure and degradation. This would be a failure in use. After 10 days sample 3 (100% polyurethane) did not exhibit any loss of adhesion or dissolution and maintained film integrity. However, the slow cure speed of sample 3 and the extended tacky period limit that adhesives usefulness in many applications.

After 10 days samples 4 and 5 did not exhibit any loss of adhesion or dissolution and maintained film integrity. Samples 4 and 5 were tack free after the UV exposure period. Thus, samples 4 and 5 comprising an integrated polyurethane-acrylate dual cure hybrid system possess the cure speed of a light cure acrylic without the tacky cure state of polyurethane adhesives while having the chemical resistance of polyurethane adhesives without the loss of adhesion and dissolution problems of acrylic adhesives.

## Claims

1. An integrated hybrid, two component adhesive, including:
a first component comprising a multifunctional polyol, optionally a short chain polyol, optionally a (meth)acrylate monomer, a urethane acrylate oligomer, a photoinitiator, a catalyst and optionally one or more additives; and
a second component comprising a polyisocyanate, a (meth)acrylate monomer, a urethane acrylate oligomer and optionally additives;
a linking component present in the first component, the second component or both the first component and the second component;
wherein the adhesive in mixed form has both a UV cure mechanism and a reactive cure mechanism, the cured reaction products will maintain adhesion to a membrane surface in a bend test according to the method specified in the description and cured reaction products will maintain adhesion to a membrane surface after 10 days of an immersion test by immersing the cured reaction products in a 12.5 pH aqueous solution, which were then placed in an 80 °C temperature-controlled oven.

2. The integrated hybrid, two component adhesive of claim 1 wherein the adhesive in mixed form can be cured to a surface tack free state by exposure to UV radiation, in which the curing surface was tested for tackiness by feel.

3. The integrated hybrid, two component adhesive of claim 1, wherein:
the first component comprises 10 to 35 wt. % of the multifunctional polyol, 0.5 to 5 wt.% of the short chain polyol, 0 to 10 wt. % of the (meth)acrylate monomer, 10 to 50 wt. % of the urethane acrylate oligomer, the photoinitiator, the catalyst and optionally one or more additives, wherein the total of all materials in the first component is 100 wt.%;
the second component comprises 20 to 75 wt. % of the polyisocyanate, 0 to 30 wt. % of the (meth)acrylate monomer, 5 to 35 wt. % of the urethane acrylate oligomer and optionally additives, wherein the total of all materials in the second component is 100 wt. %;
20 to 40 wt. % of the linking component present in the first part, the second part or both the first part and the second part.

4. The integrated hybrid, two component adhesive of claim 1 in mixed form coated on a surface of a filtration membrane.

5. The integrated hybrid, two component adhesive of claim 1, wherein the adhesive in mixed form is coated adjacent a membrane fold line on a membrane surface.

6. The integrated hybrid, two component adhesive of claim 1, wherein the adhesive in mixed form is coated adjacent a membrane fold line on a membrane surface and the surface is selected from polyamide, polyethersulfone and polyester scrim.

7. The integrated hybrid, two component adhesive of claim 1, wherein the adhesive in mixed form is coated adjacent a membrane fold line on a membrane surface and the remainder of the membrane surface is free of the mixed adhesive.

8. The integrated hybrid, two component adhesive of claim 1, wherein the adhesive in mixed form is coated adjacent a membrane fold line on a membrane filtration surface, a membrane support surface or both the membrane filtration surface and the membrane support surface.

9. Cured reaction products of the integrated hybrid, two component adhesive of claim 1 in mixed form bonded to a surface of a filtration membrane.

10. A filtration assembly comprising a plurality of membranes wound around a core, wherein cured reaction products of the two component adhesive of claim 1 in mixed form are bonded to a surface of at least one filtration membrane.

11. A filtration assembly comprising a plurality of membranes wound around a core, wherein cured reaction products of the two component adhesive of claim 1 in mixed form are bonded to a surface of at least one filtration membrane adjacent a fold line.

12. A method of reinforcing the fold area of a membrane, comprising:
providing a first component comprising a multifunctional polyol, optionally a short chain polyol, optionally a (meth)acrylate monomer, a urethane acrylate oligomer, a photoinitiator, a catalyst and optionally one or more additives; and
providing a second component comprising a polyisocyanate, a (meth)acrylate monomer, a urethane acrylate oligomer and optionally additives;
wherein a linking component is present in the first component, the second component or both the first component and the second component;
mixing the first component and the second component to initiate a first cure reaction between the polyols and the polyisocyanate and form a mixed adhesive composition;
providing a membrane having a filtration surface, a support surface and defining a fold line;
coating the filtration surface, the support surface or both the filtration surface and the support surface adjacent the fold line with the mixed adhesive composition; and
exposing the mixed adhesive composition coated on the membrane surface to actinic radiation to initiate a second cure reaction.

13. The method of claim 12 wherein cured reaction products of the mixed adhesive composition will maintain adhesion to a membrane surface in a bend test according to the method specified in the description and cured reaction products will maintain adhesion to a membrane surface after 10 days of an immersion test by immersing the cured reaction products in a 12.5 pH aqueous solution, which were then placed in an 80 °C temperature-controlled oven.

14. Use of the integrated hybrid, two component adhesive of claim 1 for coating the fold line areas of a filtration assembly component.

## Patentansprüche

1. Integrierter hybrider Zweikomponentenklebstoff, einschließlich:
einer ersten Komponente, umfassend ein multifunktionelles Polyol, optional ein kurzkettiges Polyol, optional ein (Meth)acrylatmonomer, ein Urethanacrylatoligomer, einen Photoinitiator, einen Katalysator und optional ein oder mehrere Zusätze; und
einer zweiten Komponente, umfassend ein Polyisocyanat, ein (Meth)acrylatmonomer, ein Urethanacrylatoligomer und optional Zusätze;
eine Verbindungskomponente, die in der ersten Komponente, der zweiten Komponente oder sowohl der ersten Komponente als auch der zweiten Komponente vorhanden ist;
wobei der Klebstoff in gemischter Form sowohl einen UV-Härtungsmechanismus als auch einen reaktiven Härtungsmechanismus aufweist, die gehärteten Umsetzungsprodukte eine Haftung an einer Membranoberfläche in einem Biegetest nach dem Verfahren, das in der Beschreibung angegeben ist, beibehalten und die gehärteten Umsetzungsprodukte die Haftung an einer Membranoberfläche nach 10 Tagen eines Eintauchtests durch Eintauchen der gehärteten Umsetzungsprodukte in eine wässrige Lösung mit einem pH-Wert von 12,5 beibehalten, die dann in einen auf 80 °C temperaturgeregelten Ofen platziert wurden.

2. Integrierter hybrider Zweikomponentenklebstoff nach Anspruch 1, wobei der Klebstoff in gemischter Form zu einem klebfreien Zustand der Oberfläche durch Aussetzen einer UV-Strahlung gehärtet werden kann, wobei die Härtungsoberfläche durch Fühlen auf Klebrigkeit getestet wurde.

3. Integrierter hybrider Zweikomponentenklebstoff nach Anspruch 1, wobei:
die erste Komponente zu 10 bis 35 Gew.-% das multifunktionelle Polyol, zu 0,5 bis 5 Gew.-% das kurzkettige Polyol, zu 0 bis 10 Gew.-% das (Meth)acrylatmonomer, zu 10 bis 50 Gew.-% das Urethanacrylatoligomer, den Photoinitiator, den Katalysator und optional ein oder mehrere Zusätze umfasst, wobei die Summe aller Materialien in der ersten Komponente 100 Gew.-% beträgt;
die zweite Komponente zu 20 bis 75 Gew.-% das Polyisocyanat, zu 0 bis 30 Gew.-% das (Meth)acrylatmonomer, zu 5 bis 35 Gew.-% das Urethanacrylatoligomer und optional Zusätze umfasst, wobei die Summe aller Materialien in der zweiten Komponente 100 Gew.-% beträgt;
20 bis 40 Gew.-% der Verbindungskomponente in dem ersten Teil, dem zweiten Teil oder sowohl dem ersten Teil als auch dem zweiten Teil vorhanden sind.

4. Integrierter hybrider Zweikomponentenklebstoff nach Anspruch 1 in gemischter Form, beschichtet auf einer Oberfläche einer Filtrationsmembran.

5. Integrierter hybrider Zweikomponentenklebstoff nach Anspruch 1, wobei der Klebstoff in gemischter Form angrenzend an eine Membranfaltlinie auf einer Membranoberfläche beschichtet ist.

6. Integrierter hybrider Zweikomponentenklebstoff nach Anspruch 1, wobei der Klebstoff in gemischter Form angrenzend an eine Membranfaltlinie auf einer Membranoberfläche beschichtet ist und die Oberfläche aus Polyamid, Polyethersulfon und Polyestergitterstoff ausgewählt ist.

7. Integrierter hybrider Zweikomponentenklebstoff nach Anspruch 1, wobei der Klebstoff in gemischter Form angrenzend an eine Membranfaltlinie auf einer Membranoberfläche beschichtet ist und der Rest der Membranoberfläche frei von dem gemischten Klebstoff ist.

8. Integrierter hybrider Zweikomponentenklebstoff nach Anspruch 1, wobei der Klebstoff in gemischter Form angrenzend an eine Membranfaltlinie auf einer Membranfiltrationsoberfläche, einer Membranträgeroberfläche oder sowohl der Membranfiltrationsoberfläche als auch der Membranträgeroberfläche beschichtet ist.

9. Gehärtete Umsetzungsprodukte des integrierten hybriden Zweikomponentenklebstoffs nach Anspruch 1 in gemischter Form, gebunden an eine Oberfläche einer Filtrationsmembran.

10. Filtrationsanordnung, umfassend eine Vielzahl von Membranen, die um einen Kern herum gewickelt sind, wobei gehärtete Umsetzungsprodukte des Zweikomponentenklebstoffs nach Anspruch 1 in gemischter Form an eine Oberfläche von mindestens einer Filtrationsmembran gebunden sind.

11. Filtrationsanordnung, umfassend eine Vielzahl von Membranen, die um einen Kern herum gewickelt sind, wobei gehärtete Umsetzungsprodukte des Zweikomponentenklebstoffs nach Anspruch 1 in gemischter Form an eine Oberfläche von mindestens einer Filtrationsmembran angrenzend an eine Faltlinie gebunden sind.

12. Verfahren zum Verstärken des Faltbereichs einer Membran, umfassend:
Bereitstellen einer ersten Komponente, umfassend ein multifunktionelles Polyol, optional ein kurzkettiges Polyol, optional ein (Meth)acrylatmonomer, ein Urethanacrylatoligomer, einen Photoinitiator, einen Katalysator und optional ein oder mehrere Zusätze; und
Bereitstellen einer zweiten Komponente, umfassend ein Polyisocyanat, ein (Meth)acrylatmonomer, ein Urethanacrylatoligomer und optional Zusätze;
wobei eine Verbindungskomponente in der ersten Komponente, der zweiten Komponente oder sowohl der ersten Komponente als auch der zweiten Komponente vorhanden ist;
Mischen der ersten Komponente und der zweiten Komponente, um eine erste Härtungsreaktion zwischen den Polyolen und dem Polyisocyanat einzuleiten und eine gemischte Klebstoffzusammensetzung auszubilden;
Bereitstellen einer Membran, die eine Filtrationsoberfläche, eine Trägeroberfläche aufweist, und eine Faltlinie definiert;
Beschichten der Filtrationsoberfläche, der Trägeroberfläche oder sowohl der Filtrationsoberfläche als auch der Trägeroberfläche angrenzend an die Faltlinie mit der gemischten Klebstoffzusammensetzung; und
Aussetzen der gemischten Klebstoffzusammensetzung, die auf der Membranoberfläche beschichtet ist, einer aktinischen Strahlung, um eine zweite Härtungsreaktion einzuleiten.

13. Verfahren nach Anspruch 12, wobei gehärtete Umsetzungsprodukte der gemischten Klebstoffzusammensetzung die Haftung an einer Membranoberfläche in einem Biegetest nach dem Verfahren, das in der Beschreibung angegeben ist, beibehalten und gehärtete Umsetzungsprodukte die Haftung an einer Membranoberfläche nach 10 Tagen eines Eintauchtests durch Eintauchen der gehärteten Umsetzungsprodukte in eine wässrige Lösung mit einem pH-Wert von 12,5 beibehalten, die dann in einen auf 80 °C temperaturgeregelten Ofen platziert wurden.

14. Verwendung des integrierten hybriden Zweikomponentenklebstoffs nach Anspruch 1 zum Beschichten der Faltlinienbereiche einer Filtrationsanordnungskomponente.

## Revendications

1. Adhésif hybride intégré à deux composants comportant :
un premier composant comprenant un polyol multifonctionnel, facultativement un polyol à chaîne courte, facultativement un monomère de (méth)acrylate, un oligomère acrylate uréthane, un photo-initiateur, un catalyseur et facultativement un ou plusieurs additifs ; et
un second composant comprenant un polyisocyanate, un monomère de (méth)acrylate, un oligomère acrylate uréthane et facultativement des additifs ;
un composant de liaison présent dans le premier composant, le second composant ou à la fois dans le premier et le second composant ;
dans lequel l'adhésif sous forme mélangée possède à la fois un mécanisme de durcissement aux UV et un mécanisme de durcissement par réaction, les produits de réaction durcis conserveront leur adhérence à une surface de membrane lors d'un essai de pliage selon la méthode spécifiée dans la description et les produits de réaction durcis conserveront leur adhérence à une surface de membrane après 10 jours d'un essai d'immersion en immergeant les produits de réaction durcis dans une solution aqueuse à un pH de 12,5, qui ont ensuite été placés dans une étuve à une température régulée de 80 °C.

2. Adhésif hybride intégré à deux composants selon la revendication 1, dans lequel l'adhésif sous forme mélangée peut être durci jusqu'à un état de surface non collante par exposition à un rayonnement UV, dans lequel la surface de durcissement est testée au toucher pour déterminer si elle est collante.

3. Adhésif hybride intégré à deux composants selon la revendication 1, dans lequel :
le premier composant comprend 10 à 35 % en poids du polyol multifonctionnel, 0,5 à 5 % en poids du polyol à chaîne courte, 0 à 10 % en poids du monomère de (méth)acrylate, 10 à 50 % en poids de l'oligomère acrylate uréthane, le photo-initiateur, le catalyseur et facultativement un ou plusieurs additifs, dans lequel le total de tous les matériaux dans le premier composant est de 100 % en poids ;
le second composant comprend 20 à 75 % en poids du polyisocyanate, 0 à 30 % en poids du monomère de (méth)acrylate, 5 à 35 % en poids de l'oligomère acrylate uréthane et facultativement des additifs, dans lequel le total de tous les matériaux dans le second composant est de 100 % en poids ;
20 à 40 % en poids du composant de liaison étant présent dans la première partie, la seconde partie ou à la fois la première partie et la seconde partie.

4. Adhésif hybride intégré à deux composants selon la revendication 1, sous forme mélangée, enduit sur une surface d'une membrane de filtration.

5. Adhésif hybride intégré à deux composants selon la revendication 1, dans lequel l'adhésif sous forme mélangée est enduit de manière adjacente à une ligne de pliage de membrane sur une surface de membrane.

6. Adhésif hybride intégré à deux composants selon la revendication 1, dans lequel l'adhésif sous forme mélangée est enduit de manière adjacente à une ligne de pliage de membrane sur une surface de membrane et la surface est choisie parmi polyamide, polyéthersulfone et canevas de polyester.

7. Adhésif hybride intégré à deux composants selon la revendication 1, dans lequel l'adhésif sous forme mélangée est enduit de manière adjacente à une ligne de pliage de membrane sur une surface de membrane et le reste de la surface de membrane est exempt de l'adhésif mélangé.

8. Adhésif hybride intégré à deux composants selon la revendication 1, dans lequel l'adhésif sous forme mélangée est enduit de manière adjacente à une ligne de pliage de membrane sur une surface de filtration de membrane, une surface de support de membrane ou à la fois la surface de filtration de membrane et la surface de support de membrane.

9. Produits de réaction durcis de l'adhésif hybride intégré à deux composants selon la revendication 1, sous forme mélangée, collés à une surface d'une membrane de filtration.

10. Ensemble de filtration comprenant une pluralité de membranes enroulées autour d'un noyau, dans lequel les produits de réaction durcis de l'adhésif à deux composants selon la revendication 1 sous forme mélangée sont collés à une surface d'au moins une membrane de filtration.

11. Ensemble de filtration comprenant une pluralité de membranes enroulées autour d'un noyau, dans lequel les produits de réaction durcis de l'adhésif à deux composants selon la revendication 1 sous forme mélangée sont collés à une surface d'au moins une membrane de filtration adjacente à une ligne de pliage.

12. Procédé de renforcement de la zone de pliage d'une membrane, comprenant :
la fourniture d'un premier composant comprenant un polyol multifonctionnel, facultativement un polyol à chaîne courte, facultativement un monomère de (méth)acrylate, un oligomère acrylate uréthane, un photo-initiateur, un catalyseur et facultativement un ou plusieurs additifs ; et
la fourniture d'un second composant comprenant un polyisocyanate, un monomère de (méth)acrylate, un oligomère acrylate uréthane et facultativement des additifs ;
dans lequel un composant de liaison est présent dans le premier composant, le second composant ou à la fois dans le premier composant et le second composant ;
le mélange du premier composant et du second composant pour initier une première réaction de polymérisation entre les polyols et le polyisocyanate et former une composition adhésive mélangée ;
la fourniture d'une membrane ayant une surface de filtration, une surface de support et définissant une ligne de pliage ;
l'enduction de la surface de filtration, de la surface de support ou à la fois de la surface de filtration et de la surface de support de manière adjacente à la ligne de pliage avec la composition adhésive mélangée ; et
l'exposition de la composition adhésive mélangée enduite sur la surface de membrane à un rayonnement actinique afin d'initier une seconde réaction de polymérisation.

13. Procédé selon la revendication 12, dans lequel les produits de réaction durcis de la composition adhésive mixte conserveront leur adhérence à une surface de membrane lors d'un essai de pliage selon la méthode spécifiée dans la description et les produits de réaction durcis conserveront leur adhérence à une surface d'une membrane après 10 jours d'un essai d'immersion en immergeant les produits de réaction durcis dans une solution aqueuse à un pH de 12,5, qui ont ensuite été placés dans une étuve à une température régulée de 80 °C.

14. Utilisation de l'adhésif hybride intégré à deux composants selon la revendication 1 permettant d'enduire les zones de la ligne de pliage d'un composant d'ensemble de filtration.
